# NEUE EUROPÄISCHE PATENTSCHRIFT

(11) **EP 3 485 190 B2**
(45) Veröffentlichungstag und Bekanntmachung des Hinweises auf die Entscheidung über den Einspruch: **17.07.2024**
(45) Hinweis auf die Patenterteilung: 05.05.2021
(21) Anmeldenummer: 17742216.9
(22) Anmeldetag: 12.07.2017
(51) Int. Cl.: F16L 11/112, B29C 53/78, F16L 11/118, F16L 11/127, F16L 11/24

(54) **SCHLAUCHLEITUNG FÜR DEN TRANSPORT ABRASIVER MEDIEN SOWIE VERFAHREN UND VORRICHTUNG ZU DEREN HERSTELLUNG**
HOSE LINE FOR TRANSPORTING ABRASIVE MEDIA AND METHOD AND DEVICE FOR ITS MANUFACTURE
CONDUITE EN TUYAUX FLEXIBLES DESTINÉE À TRANSPORTER DES PRODUITS ABRASIFS ET PROCÉDÉ ET DISPOSITIF DESTINES À SA FABRICATION

(30) Priorität: 14.07.2016 EP 16179469
(43) Veröffentlichungstag der Anmeldung: 22.05.2019
(73) Patentinhaber: Masterflex SE, 45891 Gelsenkirchen (DE)
(72) Erfinder: NÜßEN, Stefan, 45879 Gelsenkirchen (DE); KAPTEINA, Tanja, 44651 Herne (DE); JACOBI, Joachim, 44803 Bochum (DE)
(74) Vertreter: Uexküll & Stolberg
(86) Internationale Anmeldenummer: PCT/EP2017/067567
(87) Internationale Veröffentlichungsnummer: WO 2018/011273

(56) Entgegenhaltungen:
- EP-A1- 0 185 650
- EP-B1- 2 304 294
- WO-A1-2014/119162
- WO-A2-2014/005064
- AT-U1- 6 114
- DE-T2- 69 932 950
- DE-U1- 29 602 061
- JP-B2- 3 440 658
- JP-B2- 5 340 714
- US-A- 2 516 864
- US-A1- 2012 278 018

## Beschreibung

Die Erfindung betrifft die Verwendung einer Schlauchleitung für den Transport abrasiver Medien in einem Überwachungssystem mit einem in oder an der Schlauchwandung verlaufenden elektrisch leitfähigen Verstärkungselement, das sich in Schlauchrichtung erstreckt. Ferner betrifft die Erfindung ein Überwachungssystem zur Überwachung des Zustands, insbesondere des Verschleißes, einer Schlauchleitung.

Auf vielen technischen Gebieten gibt es die Anforderung, Feststoffe, Gase oder Flüssigkeiten zu fördern oder abzusaugen. Die hierfür eingesetzten Schlauchleitungen sind oftmals hohen Belastungen ausgesetzt, denn das transportierte Medium kann zu einem erheblichen Abrieb der Innenseite der Schlauchwandung führen. Dies führt nach einem gewissen Zeitraum zu einer Beschädigung der Schlauchwandung. Infolgedessen kann es zu einer Leckage der Schlauchleitung kommen. Häufig wird noch verlangt, dass die Schlauchleitungen ein gewisses Maß an Flexibilität mit sich bringen, was dazu führt, dass die Leitungen auch häufigen Biegebeanspruchungen ausgesetzt sind. Für diese Einsatzzwecke sind insbesondere Schlauchleitungen mit einer helix- bzw. schraubenförmig verlaufenden Verstärkungswendel bekannt, die hohe Flexibilität und Widerstandsfähigkeit kombinieren. Es handelt sich hierbei insbesondere um extrudierte Kunststoffprofile mit verdreh- und verschiebefest eingegossenem Federstahldraht.

Das Auftreten von Leckage infolge von Verschleiß durch Abrieb oder durch einen nicht erkannten Bruch einer Schlauchleitung oder einer Verstärkungswendel ist im Allgemeinen mit hohen Kosten und erheblichem Arbeitsaufwand zur Behebung des Schadensfalls verbunden. Da der Verschleiß der Schlauchinnenwand von außen nicht erkennbar ist, wird oftmals ein rechtzeitiger Austausch der Schlauchleitung nicht vorgenommen.

Die AT 6 114 U1 beschreibt einen Verschleißindikator für Schläuche aus Kunststoff oder Gummi zum Transport abrasiver Medien, welcher in der Schlauchwand angeordnet ist und welcher einen elektrischen Leiter aufweist, der Teil eines elektronischen Schaltkreises ist. Die elektrischen Leiter sind in die Schlauchwand eingebettet. Als Stützträger ist außerhalb der elektrischen Leiter eine Stütz- oder Trägerschicht aus Stahl- oder Textilgewebe eingebettet.

Die JP 3440658 B2 beschreibt eine Schlauchleitung mit einer Verstärkungsschicht, in der ein Draht eingebettet ist. Ein Paar von zusätzlichen elektrischen Leitern sind axial voneinander beabstandet in die Schlauchwand eingebettet. Die elektrischen Leiter sind an einen elektrischen Detektor angeschlossen.

Der vorliegenden Erfindung liegt die Aufgabe zugrunde, eine Schlauchleitung bereitzustellen, die es ermöglicht, einen Verschleiß der Schlauchleitung rechtzeitig vor dem Auftreten einer Leckage festzustellen.

Diese Aufgabe wird durch die in Anspruch 1 definierte Verwendung einer Schlauchleitung in einem Überwachungssystem sowie durch ein Überwachungssystem mit den Merkmalen des Anspruchs 6 gelöst. Vorteilhafte Ausführungsformen der Erfindung sind Gegenstand der Unteransprüche.

Erfindungsgemäß ist vorgesehen, dass eine Einlage aus elektrisch leitendem Material zumindest teilweise in die Schlauchwandung eingebettet ist und sich beabstandet zum Verstärkungselement in Schlauchrichtung erstreckt.

Die Einlage aus elektrisch leitendem Material bildet einen elektrischen Leiter, der sich in einem Abstand zu dem Verstärkungselement in Schlauchrichtung bzw. in Längsrichtung des Schlauches erstreckt, so dass die Einlage und das Verstärkungselement nicht elektrisch miteinander verbunden sind bzw. elektrisch voneinander isoliert sind. Da sowohl das Verstärkungselement als auch die Einlage elektrisch leitend sind, können diese in einen Überwachungsschaltkreis integriert werden. Bei einem solchen Überwachungssystem werden nach Verlegung der Schlauchleitung das erste Ende der Schlauchleitung und das erste Ende der Einlage an einen elektrischen Widerstands- oder Durchgangsmesser angeschlossen. Da die Einlage und das Verstärkungselement in der Schlauchwandung elektrisch voneinander getrennt sind, werden das Verstärkungselement und die Einlage am zweiten Ende oder einem beliebigen anderen Abschnitt elektrisch miteinander verbunden, um den elektrischen Schaltkreis zu schließen. Beispielsweise können das Verstärkungselement und die Einlage am zweiten Ende durch eine Klammer, einen Kontaktschuh oder ein anderes Kontaktelement, wie einen elektrisch leitfähigen Niet, elektrisch miteinander verbunden werden. Des Weiteren kann beispielsweise eine Nadel in die Schlauchleitung, insbesondere in das elektrisch leitende Material gestochen werden und dann eine elektrische Verbindung zwischen der Nadel und dem Verstärkungselement (beispielsweise durch einen Draht oder ein Kabel) hergestellt werden. Möglich ist auch ein elektrisch leitender Klebestreifen. Kommt es infolge starken Abriebs der Innenwand der Schlauchleitung oder infolge eines Bruches der Schlauchleitung zu einer Beschädigung des Verstärkungselements oder der Einlage, verändert sich auch der gemessene elektrische Widerstand, was durch den Widerstandsmesser registriert und angezeigt werden kann. Anwender erhalten so frühzeitig eine Meldung über den Zustand der Schlauchleitung und können entsprechende Gegenmaßnahmen treffen. Ein Bruch der elektrischen Verbindung kann auch leicht mit einem Durchgangsmesser- bzw. einem Durchgangsprüfer erfasst werden.

Das Verstärkungselement kann vollständig in die Schlauchwandung eingebettet sein, so dass es durch die Schlauchwandung von dem Schlauchinneren und dem Schlauchäußeren getrennt ist. Es ist auch möglich, dass das Verstärkungselement nur teilweise in die Schlauchwandung eingebettet ist und ein Abschnitt des Verstärkungselements zum Schlauchinneren oder Schlauchäußeren hin freiliegt. Auch die Einlage aus elektrisch leitendem Material kann so in die Schlauchwandung eingebettet sein, dass die Schlauchwandung die Einlage vollständig umgibt. Es ist aber auch möglich, dass die Einlage nur teilweise von der Schlauchwandung aufgenommen ist und beispielsweise ein innerer Abschnitt der Einlage zum Schlauchinneren hin freiliegt. Dazu kann die Einlage auch an der Innenseite der Schlauchwandung festgelegt sein.

Bevorzugt ist vorgesehen, dass das elektrisch leitende Material und/oder das Verstärkungselement vom Schlauchinneren durch eine Verschleißschicht getrennt sind. Die Verschleißschicht kann Teil der Einlage sein und/oder durch einen Abschnitt der Schlauchwandung gebildet werden. Durch Wahl der Dicke der Verschleißschicht kann ein vorbestimmtes Maß an Abnutzung festgelegt werden, ab dem die Verschleißwarnfunktion aktiv werden soll.

Grundsätzlich ist es möglich, dass die Schlauchwandung aus mehreren Lagen oder Schichten in Sandwich-Bauweise besteht. Hierzu können mehrere Folienlagen übereinander gelegt werden. Das elektrisch leitende Material kann zwischen zwei der Lagen angeordnet sein. Vorteilhafterweise ist das elektrisch leitende Material durch ein oder mehrere Schichten oder durch eine eigene Verschleißschicht von der Innenseite des Schlauches getrennt. Gleichermaßen kann das elektrisch leitende Material an der Innenseite des Schlauches angebracht sein. Das Verstärkungselement kann ebenfalls zwischen zwei Schichten angeordnet sein. Es ist aber auch möglich, das Verstärkungselement an der Außenseite oder Innenseite des Schichtzusammenbaus festzulegen, beispielsweise anzuschweißen.

Vorzugsweise besteht die Schlauchleitung aus thermoplastischem Kunststoff. Lediglich beispielshaft und nicht einschränkend seien hierzu thermoplastische Elastomere auf Urethanbasis (TPU). d.h. Polyurethan (PU), wie z.B. Polyether-Polyurethan und Polyester-Polyurethan, Polyvinylchlorid (PVC) oder Polyethylen (PE) genannt, aber auch thermoplastische Vulkanisate (TPV), wie Santropene. Weitere geeignete Materialien stellen insbesondere thermoplastische Elastomere dar, wie:
- TPA (Thermoplastische Copolyamide)
- TPC (Thermoplastische Polyesterelastomere / Thermoplastische Copolyester)
- TPO (Thermoplastische Elastomere auf Olefinbasis), z.B. PP/EPDM
- TPS (Styrol-Blockcopolymere, z.B. SBS, SEBS, SEPS, SEEPS und MBS).

Nach einer bevorzugten Ausführungsform der Erfindung weist die Schlauchleitung eine helix- bzw. schraubenlinienförmig verlaufende Werkstoffbahn, die die Schlauchwandung bildet oder zumindest eine Schicht derselben, sowie ein helix- bzw. schraubenlinienförmig verlaufendes Verstärkungselement auf, das an oder in der Schlauchwandung befestigt ist. Die Werkstoffbahn, die zur Bildung der Schlauchleitung gewendelt wird, ist vorzugsweise eine extrudierte Profilfahne aus thermoplastischem Kunststoff.

Derartige Schlauchleitungen mit helixförmig verlaufender Verstärkungswendel können in der Weise hergestellt werden, dass eine Werkstoffbahn, an der die Verstärkungswendel befestigt ist, schraubenlinienförmig aufgewickelt wird. Ein bekanntes Verfahren sieht vor, dass eine als Profilfahne extrudierte Werkstoffbahn um einen Fertigungsdorn oder dergleichen aufgewickelt und der bereits auf den Fertigungsdorn aufgewickelte Teil der Bahn von diesem axial abgezogen werden, so dass die Bahn helixförmig aufgewickelt wird. Der Randbereich des neu auf den Fertigungsdorn auftreffenden Bahnabschnitts wird mit dem Randbereich des Bahnabschnitts verbunden, der den Dorn bereits einmal umschlungen hat. Auf diese Weise kann eine Schlauchleitung gebildet werden, die mit einem helixförmig verlaufenden Verstärkungselement versehen ist. Die Längskantenabschnitte benachbarter Wendelwicklungen bzw. die gegenüberliegenden Randbereiche der Werkstoffbahn können überlappend miteinander verbunden werden.

Neben einer extrudierten Profilfahne kann auch ein Folienstreifen als Werkstoffbahn bereitgestellt werden, wobei der Folienstreifen derart gewendelt wird, dass benachbarte Randbereiche überlappen. In bevorzugter Weise werden die überlappenden Randbereiche durch Verschweißen miteinander verbunden.

Bevorzugt kann sich das elektrisch leitende Material axial parallel zur Schlauchachse erstrecken. Eine bevorzugte Ausführungsform sieht vor, dass sich das elektrisch leitende Material helix- bzw. schraubenlinienförmig in Schlauchrichtung erstreckt. Nach einer weiteren Ausführungsform der Erfindung erstreckt sich das Verstärkungselement im Wesentlichen parallel zu dem elektrisch leitenden Material in Schlauchrichtung bzw. entlang der Schlauchachse, wobei ein im Wesentlichen konstanter Abstand zwischen den beiden elektrischen Leitern, d.h. der Einlage und dem Verstärkungselement, erhalten bleibt.

Eine besonders bevorzugte Ausführungsform sieht ein helixförmig verlaufendes Verstärkungselement vor, wobei sich das elektrisch leitende Material ebenfalls helixförmig in Schlauchrichtung erstreckt. Die beiden Helices können parallel zueinander verlaufen, beispielsweise in radialer Richtung, wobei die eine Helix die andere Helix umgibt.

Eine weitere Ausführungsform sieht vor, dass das helixförmig verlaufende Verstärkungselement und das helixförmig verlaufende elektrisch leitende Material axial versetzt zueinander sind, so dass in einer Draufsicht auf die Schlauchachse, die Helix des einen Elements zwischen benachbarten Windungen des anderen Elements verläuft. Dabei können die Helices radial versetzt zueinander verlaufen oder im Wesentlichen den gleichen Abstand zur Schlauchachse aufweisen, so dass sie sich nach Art einer Doppelhelix oder Doppelwindung mit parallelen Spiralen in Schlauchrichtung erstrecken. Auf diese Weise lassen sich besonders zuverlässige Messergebnisse des elektrischen Widerstandes und somit eine besonders zuverlässige Verschleißwarnung und/oder Bruchwarnung erzielen.

Das Verstärkungselement ist eine Drahtspirale. Die Drahtspirale kann in einer Ausführungsform mit einem Kunststoff ummantelt oder beschichtet sein, um ein Anbringen des Verstärkungselements auf der Schlauchleitung mittels Verschweißen, z.B. bei der Herstellung von Schlauchleitungen mit aufgesetzter Stützwendel, zu erleichtern. In einer weiteren Ausführungsform umfasst das Verstärkungselement anstelle der Drahtspirale einen elektrisch leitfähigen Kunststoff. Hierzu sind grundsätzlich sämtliche thermoplastische Kunststoffe geeignet, die sich elektrisch leitfähig ausstatten lassen, wie es weiter unten im Zusammenhang mit der Einlage aus elektrisch leitfähigem Material beschrieben ist. Bevorzugt sind rigide Polymere, wie z.B. Polyamid (PA), Polypropylen (PP) oder Hart-PVC.

Erfindungsgemäß umfasst das elektrisch leitende Material einen elektrisch leitfähigen Kunststoff.

So genannte leitfähige Polymere sind Kunststoffe mit elektrischer Leitfähigkeit, die vergleichbar mit der von Metallen ist. Die elektrische Leitfähigkeit von Kunststoffen, wie z.B. PE, PU oder PVC, kann beispielsweise durch Compoundierung modifiziert werden, in dem man Additive, wie Kohlefasern, Graphit, Metallpulver, Kohlenstoffnanoröhren (carbon nanotubes) oder Stahlfasern der Kunststoffschmelze beimischt. Es ist erfindungsgemäß, für die Wandung der Schlauchleitung und für die elektrisch leitende Einlage im Wesentlichen den gleichen Kunststoff vorzusehen, wobei sich Wandung und Einlage lediglich hinsichtlich der elektrischen Leitfähigkeit unterscheiden, wenn der Einlage entsprechende Additive zugegeben werden. Wenn die Einlage und die Schlauchwandung aus dem gleichen Kunststofftyp bestehen, ist dies hinsichtlich der Haftung zwischen den beiden Kunststoffen von Vorteil.

Eine weitere Ausführungsform der Erfindung sieht vor, dass das elektrisch leitende Material in radialer Richtung näher zur Schlauchachse bzw. näher zur Schlauchinnenwand liegt als das Verstärkungselement. Der zunehmende Abrieb der inneren Schlauchwand wirkt sich zunächst auf das elektrisch leitende Material aus, bevor das Verstärkungselement der Schlauchleitung beschädigt wird. Eine derartige Anordnung bietet den besonderen Vorteil, dass die Schlauchleitung nach einer Verschleißwarnung, die durch ein vollständiges oder teilweises Durchtrennen des elektrisch leitenden Materials der Einlage ausgelöst wird, noch eine gewisse Zeit weiterbetrieben werden kann, bevor es zum Ausfall (Leckage) der Schlauchleitung kommt. Auf diese Art und Weise erhält man einen sog. zeitlichen Puffer und es kann rechtzeitig auf einen baldigen Produktausfall reagiert und ein Wartungstermin eingeplant werden, bevor es zum spontanen Stillstand durch einen verschlissenen Schlauch kommt. Es hat sich diesbezüglich als besonders vorteilhaft herausgestellt, wenn das elektrisch leitende Material in radialer Richtung zwischen dem Verstärkungselement und dem Schlauchinneren bzw. der Schlauchlängsachse liegt.

In Weiterbildung des Erfindungsgedankens ist ferner vorgesehen, dass das Verstärkungselement und das elektrisch leitende Material durch eine Isolierschicht voneinander getrennt sind. Eine Isolierschicht stellt nicht nur die Funktionssicherheit des elektrischen Schaltkreises sicher, sondern über die Dicke der Isolierschicht kann auch die Dauer des oben beschriebenen zeitlichen Puffers gesteuert werden.

Ferner ist hierin beschrieben ein Verfahren zur Herstellung einer Werkstoffbahn für eine Schlauchleitung aus thermoplastischem Kunststoff für abrasive Medien, insbesondere wie sie hierin beschrieben sind, vor, dass eine Kunststoffschmelze in einen Extrusionskopf zur Bildung einer extrudierten Werkstoffbahn geleitet und ein elektrisch leitfähiges Verstärkungselement beim Extrudieren der Werkstoffbahn mit der Werkstoffbahn verbunden wird. Ein elektrisch leitendes Material wird zur Bildung einer Einlage in der Werkstoffbahn in den Extrusionskopf geleitet und beim Extrudieren der Werkstoffbahn in einem definierten Abstand zum Verstärkungselement in die Werkstoffbahn eingebracht.

Wie in Bezug auf die Schlauchleitung bereits erläutert wurde, können das Verstärkungselement und die Einlage vollständig in die Werkstoffbahn eingebettet werden oder nur teilweise.

Die Einlage kann aus elektrisch leitfähigem thermoplastischem Kunststoff bestehen, wobei die Werkstoffbahn und die Einlage durch Coextrusion zusammengeführt werden. Wie bereits beschrieben wurde, können die Eigenschaften des Kunststoffes durch

Compoundierung modifiziert werden. Bei der Coextrusion kommt neben dem Hauptextruder ein weiterer Extruder zum Einsatz, so dass wenigstens zwei Kunststoffschmelzen vor dem Verlassen der Extrusionsvorrichtung bzw. einer Profilschablone zusammengeführt werden. Die beiden Extrudate werden in den Extrusionskopf geleitet und durch den Druck der austretenden Materialien durch das Werkzeug bzw. die Schablone gepresst. Der Eintrag des elektrisch leitfähigen Kunststoffes in die Werkstoffbahn erfolgt an vordefinierte Stelle. Das Ergebnis ist beispielsweise eine Werkstoffbahn mit einem elektrisch leitfähigen Streifen.

Anstatt das Verstärkungselement und das elektrisch leitende Material beim Extrudieren des Kunststoffes mit diesem zu verbinden, kann gemäß einem zweiten Aspekt auch ein alternatives Verfahren zur Anwendung kommen. Dieses Verfahren zur Herstellung einer Schlauchleitung für abrasive Medien sieht vor, dass eine bereits extrudierte Werkstoffbahn aus thermoplastischem Kunststoff helixförmig zur einer Schlauchleitung aufgewickelt wird und benachbarte Längskantenabschnitte der Werkstoffbahn überlappend miteinander verbunden werden, z.B. durch Verschweißen, und ein elektrisch leitfähiges Verstärkungselement mit dem Kunststoff derart verbunden wird, dass sich das Verstärkungselement helixförmig in Schlauchrichtung erstreckt. Ein elektrisch leitendes Material wird an der Schlauchleitung derart angebracht, dass es sich beabstandet zum Verstärkungselement in Schlauchrichtung erstreckt, wobei zumindest eines von dem Verstärkungselement und dem elektrisch leitenden Material an der extrudierten Werkstoffbahn, also nach der Extrusion derselben, angebracht wird.

Für dieses Verfahren stehen mehrere Möglichkeiten zur Verfügung. Beispielsweise kann das Verstärkungselement, z.B. die hierin beschriebene Drahtspirale, mit der Kunststoffbahn spiral- bzw. helixförmig aufgewickelt werden, wobei das Verstärkungselement dabei zwischen sich überlappenden Längskantenabschnitten der Werkstoffbahn verlegt und dort durch Verbinden der Längskantenabschnitte festgelegt wird. Dabei befindet sich das Verstärkungselement unmittelbar zwischen aneinander angrenzenden Abschnitten der Werkstoffbahnen in einer Art Tasche und es bedarf keiner zusätzlichen Fixierung des Verstärkungselements, beispielsweise durch Anschweißen desselben. Ebenso kann mit dem elektrisch leitenden Material verfahren werden.

Es ist ebenso möglich, das Verstärkungselement an der extrudierten Werkstoffbahn durch Verschweißen zu befestigen. So kann die Werkstoffbahn helixförmig zu einer Schlauchleitung aufgewickelt und benachbarte Längskantenabschnitte der Werkstoffbahn wie oben beschrieben überlappend miteinander verbunden werden, wobei das Verstärkungselement auf die bereits verbundenen Schlauchabschnitte oder auf andere Abschnitte der Schlauchleitung aufgeschweißt wird. Ebenso kann mit dem elektrisch leitenden Material verfahren werden.

Das eine von dem Verstärkungselement und dem elektrisch leitenden Material kann bei der Extrusion der Werkstoffbahn mit dieser verbunden, beispielsweise zumindest teilweise in diese eingebettet werden, und das andere von dem Verstärkungselement und dem elektrisch leitenden Material an der extrudierten Werkstoffbahn angebracht werden. Das elektrisch leitende Material kann beispielsweise im Rahmen der Extrusion der Werkstoffbahn wie oben beschrieben unmittelbar in diese eingebracht werden, wogegen das Verstärkungselement erst nach der Extrusion mit der Werkstoffbahn verbunden wird. Diese Vorgehensweise kann selbstverständlich auch vice versa erfolgen.

Im Rahmen des Verfahrens ist ferner vorgesehen, dass die Schlauchleitung zumindest abschnittsweise aus mehreren Kunststoffschichten oder Lagen gebildet wird, wobei das Verstärkungselement und/oder das elektrisch leitende Material zumindest teilweise zwischen zwei aneinander grenzende Kunststoffschichten eingebracht wird. Diese Vorgehensweise erweist sich insbesondere bei Schlauchleitungen, die in Sandwichbauweise aufgebaut sind, als vorteilhaft, da auf aufwendige Fixierungsmechanismen für das Verstärkungselement und/oder das elektrisch leitende Material verzichtet werden kann.

Ferner ist hierin beschrieben eine Vorrichtung zur Herstellung von Schlauchleitungen aus thermoplastischem Kunststoff mit einem zumindest teilweise in die Schlauchwandung eingebetteten Verstärkungselement, insbesondere zur Herstellung von Schlauchleitungen, wie sie hierin beschrieben sind, insbesondere mittels eines Verfahrens gemäß dem ersten Aspekt, wie es hierin beschrieben ist. Die Vorrichtung umfasst einen Extrusionskopf zum Extrudieren einer Werkstoffbahn, wobei der Extrusionskopf wenigstens einen Zufuhrkanal für fließfähigen Kunststoff aus wenigstens einem Extruder aufweist, wobei das Verstärkungselement in den Extrusionskopf geführt wird, um das Verstärkungselement beim Extrudieren der Werkstoffbahn zumindest teilweise in den Kunststoff einzubetten. Ein erster Führungsabschnitt ist dazu eingerichtet, das Verstärkungselement in dem und/oder in den Extrusionskopf zu führen, so dass das Verstärkungselement in einer definierten bzw. vorbestimmten Lage in den Kunststoff integriert wird. Außerdem ist ein weiterer, zweiter Führungsabschnitt für einen elektrischen Leiter (Einlage) vorgesehen. Der elektrische Leiter wird in den Extrusionskopf geleitet, um zumindest teilweise in den Kunststoff eingebettet zu werden. Der zweite Führungsabschnitt ist derart ausgebildet, dass der elektrische Leiter entlang der Werkstoffbahn in einem definierten Abstand zum Verstärkungselement in den Kunststoff eingebettet wird.

Der erste und zweite Führungsabschnitt können vorzugsweise parallel zueinander angeordnete Durchführungen für das Verstärkungselement und den elektrischen Leiter umfassen. Die Führungsabschnitte können beispielsweise durch zwei Durchführungen in einer Einlaufführung nach Art eines Doppelröhrchens in den Extruder geführt werden. Dabei werden die Führungsabschnitte derart angeordnet, dass das Verstärkungselement und der elektrische Leiter in einem vorbestimmten Abstand zueinander gehalten werden, wenn sie in den Kunststoff eingebettet werden.

Es ist bevorzugt, dass die Werkstoffbahn als Profilfahne extrudiert wird. Um den extrudierten Kunststoff auszuformen, ist eine Profilschablone vorgesehen, die Teil des Extrusionskopfes ist oder an diesem angebracht ist.

Die Erfindung betrifft die Verwendung einer Schlauchleitung für abrasive Medien, wie sie hierin beschrieben ist, in einem Überwachungssystem zur Überwachung des Zustands, insbesondere des Verschleißes, einer Schlauchleitung, wobei an einem ersten Ende der Schlauchleitung ein erstes Ende des Verstärkungselements und ein erstes Ende der Einlage aus elektrisch leitendem Material an einen elektrischen Widerstands- oder Durchgangsmesser angeschlossen sind und wobei das Verstärkungselement und die Einlage am zweiten Ende der Schlauchleitung oder einem anderen Abschnitt der Schlauchleitung elektrisch miteinander verbunden sind. Infolge der elektrischen Verbindung von Verstärkungselement, Widerstands- oder Durchgangsmesser und Einlage wird ein elektrischer Schaltkreis geschlossen. Anders ausgedrückt, das Verstärkungselement, der Widerstands- oder Durchgangsmesser und die Einlage sind in einen elektrischen Schaltkreis eingebunden.

Kommt es infolge starken Abriebs der Innenwand der Schlauchleitung oder infolge eines Bruches der Schlauchleitung zu einer Beschädigung des Verstärkungselements oder der Einlage, verändert sich auch der gemessene elektrische Widerstand, was durch den Widerstandsmesser oder den Durchgangsmesser registriert und angezeigt werden kann.

Als Verbindungselemente zum Herstellen einer elektrischen Verbindung zwischen dem Verstärkungselement und der Einlage eignen sich, wie bereits beschrieben, insbesondere Klammern, Kontaktschuhe, Nieten, Nadeln oder elektrisch leitende Klebestreifen. Grundsätzlich sind aber auch andere Kontaktelemente verwendbar, die für eine elektrisch leitende Verbindung zwischen dem Verstärkungselement und der Einlage geeignet sind.

Desweiteren betrifft die Erfindung ein Überwachungssystem zur Überwachung des Zustands, insbesondere des Verschleißes, einer Schlauchleitung. Das System umfasst eine Schlauchleitung für abrasive Medien, wie sie hierin beschrieben ist, sowie einen elektrischen Widerstands- oder Durchgangsmesser, wobei an einem ersten Ende der Schlauchleitung ein erstes Ende des Verstärkungselements und ein erstes Ende der Einlage aus elektrisch leitendem Material an den elektrischen Widerstands- oder Durchgangsmesser angeschlossen sind und wobei das Verstärkungselement und die Einlage am zweiten Ende der Schlauchleitung oder einem anderen Abschnitt der Schlauchleitung elektrisch miteinander verbunden sind. Infolge der elektrischen Verbindungen zwischen Verstärkungselement, Widerstands- oder Durchgangsmesser und Einlage wird ein elektrischer Schaltkreis geschlossen.

Das Überwachungssystem kann grundsätzlich als System zur Verschleißwarnung bei einer Schlauchleitung ausgebildet sein.

Die vorliegende Erfindung wird im Folgenden näher erläutert. Es zeigen:
Fig. 1 eine Schlauchleitung nach einer ersten Ausführungsform in einer Schnittansicht, die nicht erfindungsgemäß ist;
Fig. 2 schematisch die Überwachung einer Schlauchleitung nach einer zweiten Ausführungsform, die nicht erfindungsgemäß ist;
Fig. 3 eine Schlauchleitung nach einer dritten Ausführungsform in einer Schnittansicht, die erfindungsgemäß ist; und
Fig. 4 eine Vorrichtung zum Extrudieren von Kunststoff in einer Schnittansicht.

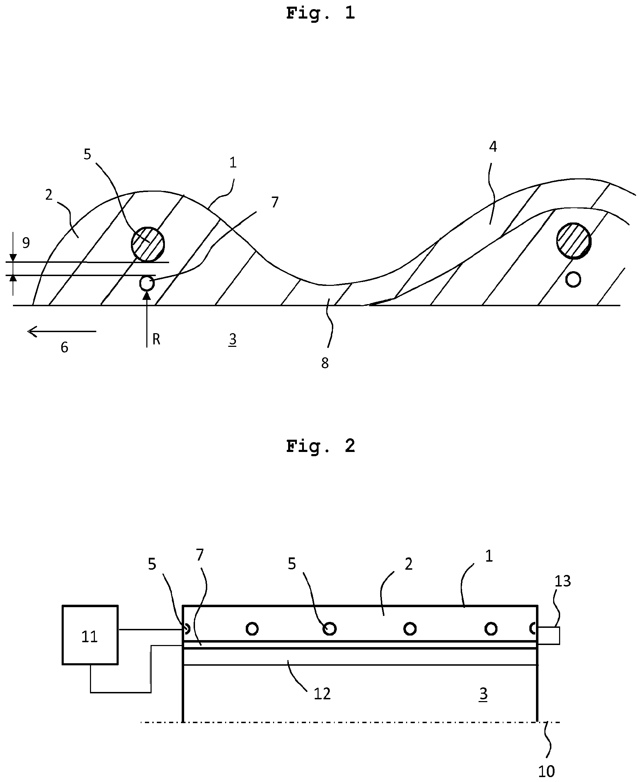

Die Figur 1 zeigt einen Abschnitt einer Schlauchleitung 1 bzw. eines Schlauches mit einer Schlauchwandung 2, die das Schlauchinnere 3 umgibt. Die Schlauchleitung 1 weist eine helixförmig verlaufende Werkstoffbahn 4 auf, die die Schlauchwandung 2 bildet. Bei der Werkstoffbahn 4 handelt es sich um eine schraubenlinienförmig aufgewendelte extrudierte Profilfahne mit eingebettetem Verstärkungselement 5 in Form einer Drahtspirale, die sich ebenfalls helixförmig in Schlauchrichtung bzw. in Längsrichtung 6 der Schlauchleitung 1 erstreckt. Das Verstärkungselement 5 ist elektrisch leitend.

Eine Einlage 7 aus elektrisch leitendem Material in Form einer Drahtlitze ist ebenfalls in die Schlauchwandung 2 eingebettet. Die Litze 7 liegt in radialer Richtung R näher zur Schlauchinnenwand 8 bzw. zur Schlauchlängsachse als das Verstärkungselement 5. Im dargestellten Ausführungsbeispiel folgt die Einlage 7 in einem Abstand 9 in paralleler Weise dem Verlauf des Verstärkungselements 5 und erstreckt sich helixförmig um die Schlauchlängsachse in Längsrichtung des Schlauches.

Schläuche der dargestellten Art werden insbesondere zum Transport von abrasiven Medien verwendet. Je nach Bedarf kann der Schlauch auf die gewünschte Länge geschnitten werden. Infolge von Verschleiß kann die Dicke der Schlauchwandung 2 abnehmen, so dass es zur Leckage kommt. Auch im Rahmen der Verlegung oder bei dynamischer Bewegung im Betrieb können derartige Schläuche Belastungen von außen, wie beispielsweise Biegebelastungen, ausgesetzt werden. Dabei kann es zu einem Bruch der Schlauchleitung und insbesondere der Verstärkungswendel kommen. Die Figur 2 zeigt hierzu ein System zur Verschleißwarnung bei einer Schlauchleitung.

Die hier dargestellte Schlauchleitung 1 ist auf das gewünschte Maß gekürzt und besitzt wie die Schlauchleitung in der Figur 1 eine helixförmig verlaufende Werkstoffbahn und ein entsprechend verlaufendes Verstärkungselement 5. Die Einlage 7 verläuft bei dieser Ausführungsform jedoch parallel zur Längsachse 10 der Schlauchleitung 1. Das linksseitige Ende der Schlauchwandung 2 liegt frei. Das Ende des Verstärkungselements 5 und das Ende der Einlage 7 werden mit einem Widerstandsmessgerät 11 verbunden. Um den elektrischen Schaltkreis zu schließen, werden am anderen Ende der Schlauchleitung 1 das Verstärkungselement 5 und die Einlage 7 elektrisch miteinander verbunden. Bei dem hier dargestellten Ausführungsbeispiel wird eine elektrisch leitende Klammer 13 an dem Ende der Schlauchleitung 1 befestigt, so dass die Klammer 13 mit dem Verstärkungselement 5 und mit der Einlage 7 in Kontakt tritt und den elektrischen Schaltkreis schließt. Alternativ kann auch eine Nadel in das z.B. stirnseitige Ende der Einlage 7 gesteckt werden und dann z.B. über ein kleines Kabel mit dem Verstärkungselement 5 verbunden werden.

Der Abschnitt der Wandung zwischen dem Schlauchinneren 3 und der Einlage 7 dient als Verschleißschicht 12. Kommt es infolge von Verschleiß zu einer Verringerung der Wanddicke der Schlauchwandung 2, wird zunächst die Einlage 7, die in Form einer Drahtlitze ausgebildet ist, freigelegt, bevor es zu einer Beschädigung des Verstärkungselement 5 kommt. Infolge weiterer Abrasion werden einzelne Adern der Litze durchtrennt, wodurch sich der gemessene elektrische Widerstand ändert. Dies kann durch das Widerstandsmessgerät 11 angezeigt werden. Der Anwender erhält so eine frühzeitige Warnung vor einer drohenden Leckage. Dabei wirkt die Materialschicht zwischen dem Verstärkungselement 5 und der Einlage 7 effektiv als zeitlicher Puffer. Kommt es zu einem Bruch der Schlauchleitung 1 und/oder wird das Verstärkungselement 5 oder die Einlage 7 beschädigt, erhält man ebenfalls eine entsprechende Rückmeldung. Statt einer Klammer sind auch andere elektrisch leitende Mittel möglich, um das Verstärkungselement mit der Einlage elektrisch zu verbinden. Beispielsweise kann am anderen Ende der Schlauchleitung 1 ein elektrisch leitender Klebestreifen oder dergleichen angebracht werden, der die Enden des Verstärkungselements 5 und der Einlage 7 elektrisch leitend miteinander verbindet.

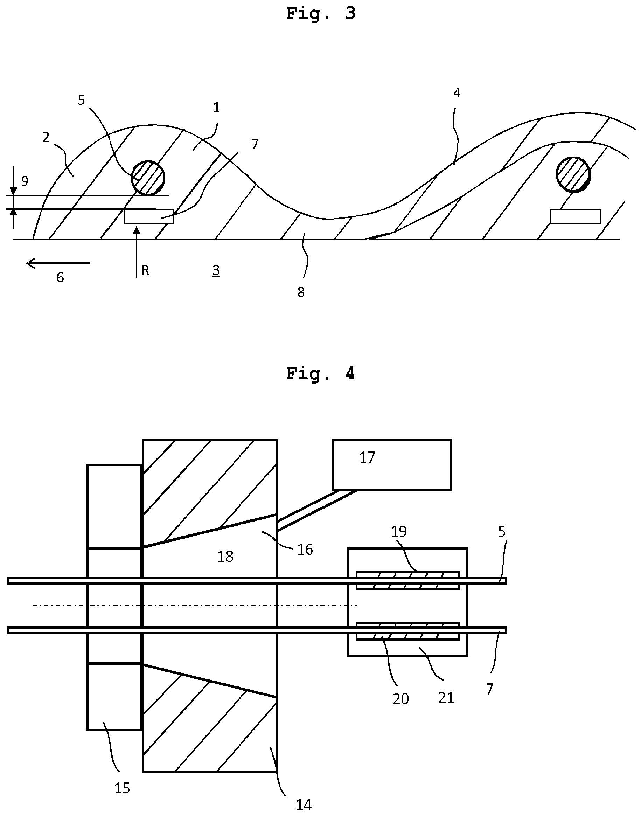

Die Schlauchleitung 1 in der Figur 3 ist im Wesentlichen genauso aufgebaut wie die Schlauchleitung aus Figur 1. Statt aus einer Drahtlitze besteht die Einlage 7 aus einem elektrisch leitenden Material in Form von extrudiertem Kunststoff, der zusammen mit der Werkstoffbahn 4 coextrudiert und dabei in die Werkstoffbahn 4 eingebracht wurde. Der Kunststoff der Einlage 7 entspricht bei dem hier dargestellten Ausführungsbeispiel im Wesentlichen dem der Schlauchwandung 2 bzw. der Werkstoffbahn 4, wurde aber durch die Zugabe von Additiven hinsichtlich seiner elektrischen Leitfähigkeit modifiziert. Kommt es infolge zunehmenden Verschleißes zu einer Beschädigung der Einlage, so ändert sich auch hier der gemessene Widerstand des bereits angesprochenen elektrischen Schaltkreises und gibt Rückschluss auf den Zustand der Schlauchleitung 1.

Die Figur 4 zeigt eine Vorrichtung 14 zum Extrudieren von Kunststoff in Form eines Extrusionskopfes mit einer Profilschablone 15. Der Extrusionskopf 14 besitzt einen Einlass 16 für ein Extrudat in Form geschmolzenen Kunststoffes, der von einem Extruder 17 bereitgestellt wird. Ein Kanal 18 durchläuft den Extrusionskopf 14. Das Extrudat durchfließt den Kanal 18, wird in die Profilschablone 15 geleitet und zu einer Profilfahne geformt.

Im Rahmen des Extrusionsprozesses soll auch das Verstärkungselement 5 in die extrudierte Werkstoffbahn eingebettet werden. Hierzu wird das Verstärkungselement 5 (hier ein Draht) in den Kanal 18 des Extrusionskopfes 14 geführt und von dem Extrudat umgeben, so dass das Verstärkungselement 5 nach Verlassen der Profilschablone 15 in den extrudierten Kunststoff eingebettet ist. Die korrekte Lage des Verstärkungselements 5 in der extrudierten Werkstoffbahn bzw. in dem Kanal 18, wo das Verstärkungselement 5 in den Kunststoff eingeschmolzen wird, wird durch einen ersten Führungsabschnitt 19 sichergestellt.

Ein elektrischer Leiter bzw. eine Einlage 7 aus elektrisch leitendem Material soll ebenfalls und in einer definierten Lage relativ zu dem Verstärkungselement 5 in die Werkstoffbahn eingebettet werden. Der elektrische Leiter 7 umfasst eine Drahtlitze, die parallel zum Verstärkungselement 5 in den Extrusionskopf 14 geführt und in den Kunststoff eingeschmolzen wird. Die relative Lage der Einlage 7 zum Verstärkungselement 5 wird durch einen zweiten Führungsabschnitt 20 sichergestellt, der die Einlage 7 parallel zum Verstärkungselement 5 führt. Der erste Führungsabschnitt 19 und der zweite Führungsabschnitt 20 werden durch zwei Durchlässe in einem hülsenartigen Element 21 gebildet. Das hülsenartige Element 21 hat die Form eines Doppelröhrchens.

### Bezugszeichenliste

- 1: Schlauchleitung
- 2: Schlauchwandung
- 3: Schlauchinneres
- 4: Werkstoffbahn
- 5: Verstärkungselement
- 6: Längsrichtung (Schlauchrichtung)
- 7: Einlage aus elektrisch leitendem Material
- 8: Schlauchinnenwand
- 9: Abstand zwischen Verstärkungselement und Einlage
- 10: Längsachse der Schlauchleitung
- 11: Widerstandmessgerät
- 12: Verschleißschicht
- 13: Klammer
- 14: Extrusionsvorrichtung
- 15: Profilschablone
- 16: Einlass
- 17: Extruder
- 18: Kanal
- 19: erster Führungsabschnitt
- 20: zweiter Führungsabschnitt
- 21: Doppelröhrchen

## Patentansprüche

1. Verwendung einer Schlauchleitung (1) für abrasive Medien in einem Überwachungssystem zur Überwachung des Zustands, insbesondere des Verschleißes, der Schlauchleitung (1),
wobei die Schlauchleitung (1) ein in oder an der Schlauchwandung (2) verlaufendes elektrisch leitfähiges Verstärkungselement (5), das sich in Schlauchrichtung (6) erstreckt, und eine Einlage (7) aus elektrisch leitendem Material, die zumindest teilweise in die Schlauchwandung (2) eingebettet ist und sich beabstandet zum Verstärkungselement (5) in Schlauchrichtung (6) erstreckt, aufweist,
**dadurch gekennzeichnet, dass** an einem ersten Ende der Schlauchleitung (1) ein erstes Ende des Verstärkungselements (5) und ein erstes Ende der Einlage (7) aus elektrisch leitendem Material an einen elektrischen Widerstands- oder Durchgangsmesser (11) angeschlossen sind, und
dass das Verstärkungselement (5) und die Einlage (7) am zweiten Ende der Schlauchleitung (1) oder einem anderen Abschnitt der Schlauchleitung (1) elektrisch miteinander verbunden sind, so dass das Verstärkungselement (5), der Widerstands- oder Durchgangsmesser (11) und die Einlage (7) in einen elektrischen Schaltkreis eingebunden sind, wobei infolge der elektrischen Verbindung zwischen Verstärkungselement, Widerstands- oder Durchgangsmesser und Einlage der elektrische Schaltkreis geschlossen wird,
wobei das Verstärkungselement eine Drahtspirale ist oder einen elektrisch leitfähigen Kunststoff umfasst, und
wobei das elektrisch leitende Material einen elektrisch leitfähigen Kunststoff umfasst,
und wobei für die Wandung der Schlauchleitung und für die elektrisch leitende Einlage im Wesentlichen der gleiche Kunststoff vorgesehen ist, wobei sich die Wandung und die Einlage durch Zugabe von Additiven zu der Einlage lediglich hinsichtlich der elektrischen Leitfähigkeit unterscheiden.

2. Verwendung einer Schlauchleitung nach Anspruch 1, **dadurch gekennzeichnet, dass** das elektrisch leitende Material und/oder das Verstärkungselement (5) von dem Schlauchinneren (3) durch eine Verschleißschicht (12) getrennt sind.

3. Verwendung einer Schlauchleitung nach einem der Ansprüche 1 oder 2, **dadurch gekennzeichnet, dass** die Schlauchleitung (1) eine helixförmig verlaufende Werkstoffbahn (4) aufweist, die die Schlauchwandung (2) bildet und ein helixförmig verlaufendes Verstärkungselement (7) aufweist, das an oder in der Schlauchwandung (2) befestigt ist.

4. Verwendung einer Schlauchleitung nach einem der vorhergehenden Ansprüche **dadurch gekennzeichnet, dass** das elektrisch leitende Material in radialer Richtung näher zur Schlauchachse (10) liegt als das Verstärkungselement (5).

5. Verwendung einer Schlauchleitung nach einem der vorhergehenden Ansprüche **dadurch gekennzeichnet, dass** das Verstärkungselement (5) und das elektrisch leitende Material durch eine Isolierschicht voneinander getrennt sind.

6. Überwachungssystem zur Überwachung des Zustands, insbesondere des Verschleißes, einer Schlauchleitung (1), umfassend
eine Schlauchleitung (1) für abrasive Medien, die ein in oder an der Schlauchwandung (2) verlaufendes elektrisch leitfähiges Verstärkungselement (5), das sich in Schlauchrichtung (6) erstreckt, und eine Einlage (7) aus elektrisch leitendem Material, die zumindest teilweise in die Schlauchwandung (2) eingebettet ist und sich beabstandet zum Verstärkungselement (5) in Schlauchrichtung (6) erstreckt, aufweist, und
einen elektrischen Widerstands- oder Durchgangsmesser (11),
**dadurch gekennzeichnet, dass** an einem ersten Ende der Schlauchleitung (1) ein erstes Ende des Verstärkungselements (5) und ein erstes Ende der Einlage (7) aus elektrisch leitendem Material an einen elektrischen Widerstands- oder Durchgangsmesser (11) angeschlossen sind, und
dass das Verstärkungselement (5) und die Einlage (7) am zweiten Ende der Schlauchleitung (1) oder einem anderen Abschnitt der Schlauchleitung (1) elektrisch miteinander verbunden sind, so dass das Verstärkungselement (5), der Widerstands- oder Durchgangsmesser (11) und die Einlage (7) in einen elektrischen Schaltkreis eingebunden sind, wobei infolge der elektrischen Verbindung zwischen Verstärkungselement, Widerstands- oder Durchgangsmesser und Einlage der elektrische Schaltkreis geschlossen wird,
wobei das Verstärkungselement eine Drahtspirale ist oder einen elektrisch leitfähigen Kunststoff umfasst,
wobei das elektrisch leitende Material einen elektrisch leitfähigen Kunststoff umfasst,
und wobei für die Wandung der Schlauchleitung und für die elektrisch leitende Einlage im Wesentlichen der gleiche Kunststoff vorgesehen ist, wobei sich die Wandung und die Einlage durch Zugabe von Additiven zu der Einlage lediglich hinsichtlich der elektrischen Leitfähigkeit unterscheiden.

7. Überwachungssystem nach Anspruch 6, **dadurch gekennzeichnet, dass** das elektrisch leitende Material und/oder das Verstärkungselement (5) von dem Schlauchinneren (3) durch eine Verschleißschicht (12) getrennt sind.

8. Überwachungssystem nach einem der Ansprüche 6 oder 7, **dadurch gekennzeichnet, dass** die Schlauchleitung (1) eine helixförmig verlaufende Werkstoffbahn (4) aufweist, die die Schlauchwandung (2) bildet und ein helixförmig verlaufendes Verstärkungselement (7) aufweist, das an oder in der Schlauchwandung (2) befestigt ist.

9. Überwachungssystem nach einem der Ansprüche 6 bis 8, **dadurch gekennzeichnet, dass** das elektrisch leitende Material in radialer Richtung näher zur Schlauchachse (10) liegt als das Verstärkungselement (5).

10. Überwachungssystem nach einem der Ansprüche 6 bis 6 **dadurch gekennzeichnet, dass** das Verstärkungselement (5) und das elektrisch leitende Material durch eine Isolierschicht voneinander getrennt sind.

## Claims

1. Use of a hose line (1) for abrasive media in a monitoring system for monitoring the state, in particular the wear, of the hose line (1),
the hose line (1) comprising an electrically conductive reinforcing element (5) running in or on the hose wall (2) and extending in the hose direction (6), and
an insert (7) made of electrically conducting material, wherein the insert (7) is at least partially embedded in the hose wall (2) and extends in the hose direction (6) at a distance from the reinforcing element (5),
**characterized in that**
at a first end of the hose line (1) a first end of the reinforcing element (5) and a first end of the insert (7) made of electrically conducting material are connected to an electrical ohmmeter or continuity tester (11), and
that the reinforcing element (5) and the insert (7) are electrically connected to each other at the second end of the hose line (1) or on another section of the hose line (1) so that the reinforcing element (5), the ohmmeter or continuity tester (11) and the insert (7) are integrated into an electric circuit, wherein as a result of the electrical connection of reinforcing element, ohmmeter or continuity tester and the insert the electric circuit is closed,
wherein the reinforcing element is a wire spiral or comprises an electrically conductive plastic, and
wherein the electrically conducting material comprises an electrically conductive plastic, and
wherein substantially the same plastic is provided for the wall of the hose line and for the electrically conducting insert, wherein the wall and the insert differ only with respect to the electrical conductivity due to the addition of additives to the insert.

2. Use of a hose line according to claim 1, **characterized in that** the electrically conducting material and/or the reinforcing element (5) are separated from the hose interior (3) by a wearing layer (12).

3. Use of a hose line according to one of claims 1 or 2, **characterized in that** the hose line (1) has a helically running material web (4), which forms the hose wall (2), and has a helically running reinforcing element (7), which is secured on or in the hose wall (2).

4. Use of a hose line according to any of the preceding claims, **characterized in that** the electrically conducting material lies closer to the hose axis (10) in the radial direction than the reinforcing element (5).

5. Use of a hose line according to any of the preceding claims, **characterized in that** the reinforcing element (5) and the electrically conducting material are separated from each other by an isolating layer.

6. Monitoring system for monitoring the state, in particular the wear, of a hose line (1); the system comprising
a hose line (1) for abrasive media, comprising an electrically conductive reinforcing element (5) running in or on the hose wall (2) and extending in the hose direction (6), and an insert (7) made of electrically conducting material, wherein the insert (7) is at least partially embedded in the hose wall (2) and extends in the hose direction (6) at a distance from the reinforcing element (5), and
an electrical ohmmeter or continuity tester (11),
**characterized in that**
at a first end of the hose line (1) a first end of the reinforcing element (5) and a first end of the insert (7) made of electrically conducting material are connected to the electrical ohmmeter or continuity tester (11), and
that the reinforcing element (5) and the insert (7) are electrically connected to each other at the second end of the hose line (1) or on another section of the hose line (1) so that the reinforcing element (5), the ohmmeter or continuity tester (11) and the insert (7) are integrated into an electric circuit,
wherein as a result of the electrical connection of reinforcing element, ohmmeter or continuity tester and the insert the electric circuit is closed,
wherein the reinforcing element is a wire spiral or comprises an electrically conductive plastic,
wherein the electrically conducting material comprises an electrically conductive plastic,
and wherein substantially the same plastic is provided for the wall of the hose line and for the electrically conducting insert, wherein the wall and the insert differ only with respect to the electrical conductivity due to the addition of additives to the insert.

7. Monitoring system according to claim 6, **characterized in that** the electrically conducting material and/or the reinforcing element (5) are separated from the hose interior (3) by a wearing layer (12).

8. Monitoring system according to one of claims 6 or 7, **characterized in that** the hose line (1) has a helically running material web (4), which forms the hose wall (2), and has a helically running reinforcing element (7), which is secured on or in the hose wall (2).

9. Monitoring system according to one of claims 6 to 8, **characterized in that** the electrically conducting material lies closer to the hose axis (10) in the radial direction than the reinforcing element (5).

10. Monitoring system according to one of claims 6 to 9, **characterized in that** the reinforcing element (5) and the electrically conducting material are separated from each other by an isolating layer.

## Revendications

1. Utilisation d'une conduite en tuyau souple (1) pour des fluides abrasifs dans un système de surveillance destiné à surveiller un état, en particulier l'usure, de la conduite en tuyau souple (1),
dans laquelle la conduite en tuyau souple (1) présente un élément de renforcement (5) électriquement conducteur évoluant dans ou sur la paroi de tuyau (2), lequel s'étend dans la direction de tuyau (6), et
un insert (7) constitué d'un matériau électriquement conducteur, lequel est au moins partiellement enrobé dans la paroi de tuyau (2) et s'étend à distance de l'élément de renforcement (5) dans la direction de tuyau (6),
**caractérisée en ce que**
à une première extrémité de la conduite en tuyau souple (1), une première extrémité de l'élément de renforcement (5) et une première extrémité de l'insert (7) constitué d'un matériau électriquement conducteur sont connectées à un compteur électrique de résistance ou de passage (11), et
**en ce que** l'élément de renforcement (5) et l'insert (7) sont reliés électriquement l'un à l'autre à la deuxième extrémité de la conduite en tuyau souple (1) ou au niveau d'une autre section de la conduite en tuyau souple (1), de sorte que l'élément de renforcement (5), le compteur électrique de résistance ou de passage (11) et l'insert (7) sont intégrés dans un circuit électrique,
dans laquelle suite à la connexion électrique entre l'élément de renforcement, le compteur électrique de résistance ou de passage et l'insert, le circuit électrique est fermé,
dans laquelle l'élément de renforcement est une spirale de fil métallique ou comprend un plastique électriquement conducteur,
dans laquelle le matériau électriquement conducteur comporte un plastique électriquement conducteur,
dans laquelle la même matière plastique est prévue pour l'essentiel pour la paroi du tuyau et pour l'insert conducteur d'électricité,
dans laquelle la paroi et l'insert se distinguent uniquement par leur conductivité électrique grâce à l'ajout d'additifs à l'insert.

2. Utilisation d'une conduite en tuyau souple selon la revendication 1, **caractérisée en ce que** le matériau électriquement conducteur et/ou l'élément de renforcement (5) est/sont séparé(s) de l'intérieur de tuyau (3) par une couche d'usure (12).

3. Utilisation d'une conduite en tuyau souple selon l'une des revendications 1 et 2, **caractérisée en ce que** la conduite en tuyau souple (1) présente une bande de matériau (4) s'étendant de façon hélicoïdale, laquelle forme la paroi de tuyau (2) et présente un élément de renforcement s'étendant de façon hélicoïdale (7), lequel est fixé sur ou dans la paroi de tuyau (2).

4. Utilisation d'une conduite en tuyau souple selon l'une des revendications précédentes, **caractérisée en ce que** le matériau électriquement conducteur est plus proche de l'axe de tuyau (10) que l'élément de renforcement (5) dans la direction radiale.

5. Utilisation d'une conduite en tuyau souple selon l'une des revendications précédentes, **caractérisée en ce que** l'élément de renforcement (5) et le matériau électriquement conducteur sont séparés l'un de l'autre par une couche isolante.

6. Système de surveillance destiné à surveiller l'état, en particulier l'usure, d'une conduite en tuyau souple (1), comportant
une conduite en tuyau souple (1) pour fluides abrasifs présentant un élément de renforcement (5) électriquement conducteur évoluant dans ou sur la paroi de tuyau (2), lequel s'étend dans la direction de tuyau (6), et un insert (7) constitué d'un matériau électriquement conducteur, lequel est au moins partiellement enrobé dans la paroi de tuyau (2) et s'étend à distance de l'élément de renforcement (5) dans la direction de tuyau (6), et
un compteur électrique de résistance ou de passage (11),
**caractérisé en ce que**
à une première extrémité de la conduite en tuyau souple (1), une première extrémité de l'élément de renforcement (5) et une première extrémité de l'insert (7) constitué d'un matériau électriquement conducteur sont connectées à un compteur électrique de résistance ou de passage (11), et
**en ce que** l'élément de renforcement (5) et l'insert (7) sont reliés électriquement l'un à l'autre à la deuxième extrémité de la conduite en tuyau souple (1) ou au niveau d'une autre section de la conduite en tuyau souple (1), de sorte que l'élément de renforcement (5), le compteur électrique de résistance ou de passage (11) et l'insert (7) sont intégrés dans un circuit électrique,
dans lequel suite à la connexion électrique entre l'élément de renforcement, le compteur électrique de résistance ou de passage et l'insert, le circuit électrique est fermé,
dans lequel l'élément de renforcement est une spirale de fil métallique ou comprend un plastique électriquement conducteur,
dans lequel le matériau électriquement conducteur comporte un plastique électriquement conducteur,
dans lequel la même matière plastique est prévue pour l'essentiel pour la paroi du tuyau et pour l'insert conducteur d'électricité,
dans lequel la paroi et l'insert se distinguent uniquement par leur conductivité électrique grâce à l'ajout d'additifs à l'insert.

7. Système de surveillance selon la revendication 6, **caractérisé en ce que** le matériau électriquement conducteur et/ou l'élément de renforcement (5) est/sont séparé(s) de l'intérieur de tuyau (3) par une couche d'usure (12).

8. Système de surveillance selon l'une des revendications 6 et 7, **caractérisé en ce que** la conduite en tuyau souple (1) présente une bande de matériau (4) s'étendant de façon hélicoïdale, laquelle forme la paroi de tuyau (2) et présente un élément de renforcement s'étendant de façon hélicoïdale (7), lequel est fixé sur ou dans la paroi de tuyau (2).

9. Système de surveillance selon l'une des revendications 6 à 8, **caractérisé en ce que** le matériau électriquement conducteur est plus proche de l'axe de tuyau (10) que l'élément de renforcement (5) dans la direction radiale.

10. Système de surveillance selon l'une des revendications 6 à 9, **caractérisé en ce que** l'élément de renforcement (5) et le matériau électriquement conducteur sont séparés l'un de l'autre par une couche isolante.
